# EUROPEAN PATENT SPECIFICATION

(11) **EP 1 428 061 B1**
(45) Date of publication and mention of the grant of the patent: **07.04.2010**
(21) Application number: 02721151.5
(22) Date of filing: 25.02.2002
(51) Int. Cl.: G02C 5/00

(54) **Eyewear**
Brille
Lunettes

(30) Priority: 23.02.2001 CA 2337731
(43) Date of publication of application: 16.06.2004
(73) Proprietor: 3M Innovative Properties Company, Saint Paul, MN 55133-3427 (US)
(72) Inventor: CYR, Raymond, Quebec H7E 3S4 (CA)
(74) Representative: Müller, Frank Peter
(86) International application number: PCT/US2002/005683
(87) International publication number: WO 2002/069020

(56) References cited:
- US-A- 4 102 566
- US-A- 5 428 410
- US-A- 5 987 653
- US-A- 6 132 041

## Description

### FIELD

The present invention relates to an eyewear, more particularly to a protective eyewear for industrial use.

### BACKGROUND

An often occurrence in industrial use is that the lens and/or ear stems of a protective eyewear break, thus requiring a user to discard the entire eyewear and replace it with a new one. Another problem in the industry relates to the prevalence of standard protective eyewear that cannot accommodate comfortably different head sizes. There is therefore a need for a protective eyewear for industrial use that can be easily mounted and/or dismounted in the event that one of its components is damaged and, at the same time, one which will provide the user with comfort.

One such eyewear has been described in U.S. Patent No. 5,987,653 issued November 23, 1999 to the present assignee, which describes an eyewear for industrial use that comprises a deformable arcuate lens with a pair of temple entries at opposite ends thereof and a deformable brow frame shaped to fit the upper edge of the lens so as to be engageable therewith. The assembly of the temple pieces and the brow frame to the lens is effected by inserting the temple pieces through the entries of the lens and by effecting a snap engagement of the mid section of the brow frame to the upper edge of the lens. There is room for improvement.

US 4,951,322 describes an eyewear comprising a curved brow frame with two ear stems bilaterally connected thereto, a unitary glass having its top edge inserted into the bottom scoop channel of the brow frame, and a nose piece having an inverted V-shaped portion to support the unitary glass and to mount on user's nose, the nose piece having a split pin for insertion through the unitary glass into the brow frame to firmly retain the unitary glass therebetween.

### SUMMARY

The above-described and other problems and disadvantages of the prior art are overcome and alleviated by the eyewear according to claim 1, wherein the components can be readily dismounted. This is achieved by using the nose piece to secure the assembly of the brow frame to the lens.

In an exemplary embodiment, the nose piece has a groove which is adapted to receive therein the lower edge of the bridging region and some parts of the sight regions.

Other objects and further scope of applicability of the present invention will become apparent from the detailed description given hereinafter. It should be understand, however, that this detailed description, while indicating preferred embodiments of this invention, is given by way of illustration only since various changes and modifications within the spirit and scope of the invention will become apparent to those skilled in the art.

### BRIEF DESCRIPTION OF THE DRAWINGS

Figure 1 is an exploded perspective view of an eyewear made in accordance with the present invention;
Figure 2 is a top perspective view of the eyewear components assembled;

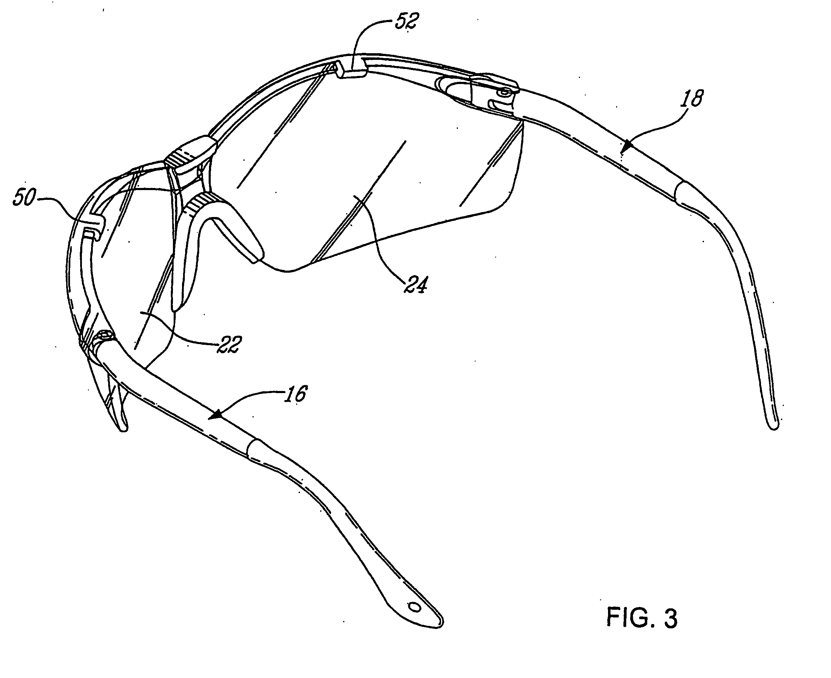

Figure 3 is a rear perspective view of the eyewear;

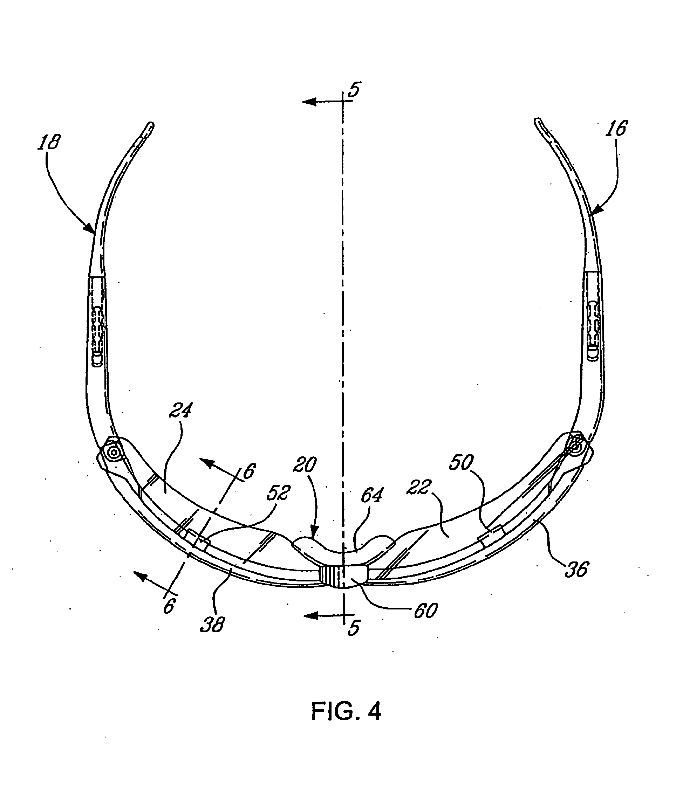

Figure 4 is a top view of the eyewear;
Figure 5 is a cross-sectional view taken along lines 5-5 of Figure 4; and
Figure 6 is a cross-sectional view taken along lines 6-6 of Figure 4.

### DESCRIPTION OF EXEMPLARY EMBODIMENTS

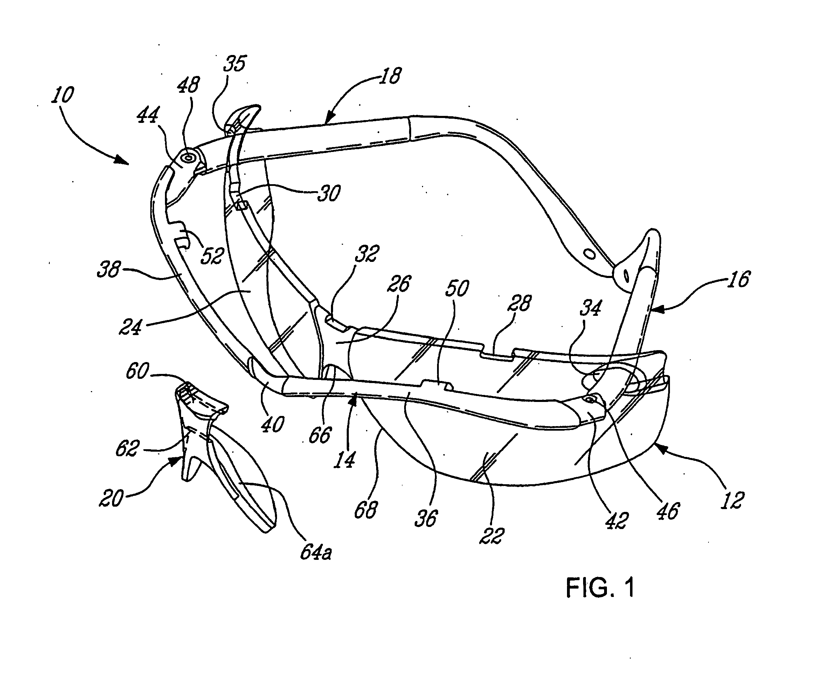

Referring to Figure 1, there is shown an eyewear, generally denoted 10, comprising five components, namely, an arcuate lens 12, a brow frame 14, a pair of ear stems 16 and 18, and a nose piece 20.

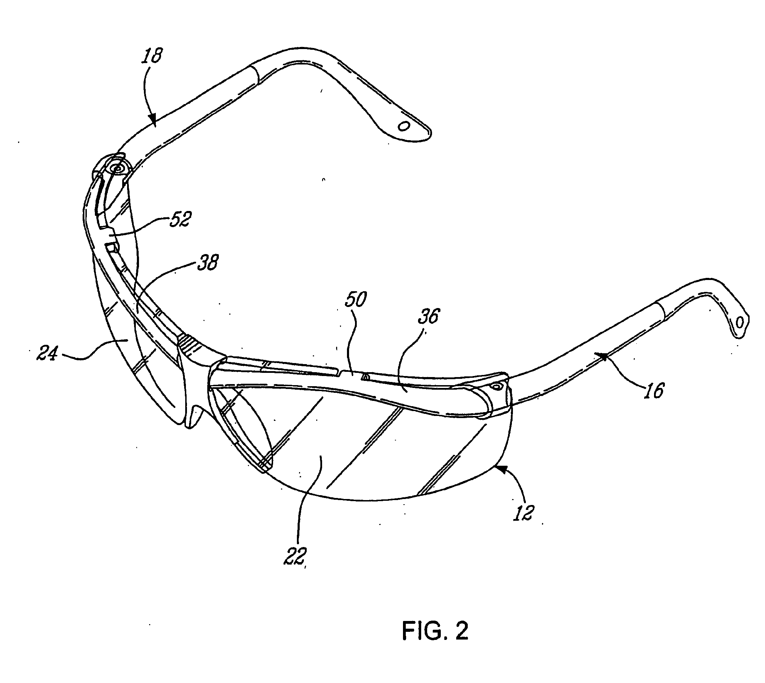

Referring also to Figure 2, which shows the components in assembled form, the arcuate lens 12 includes a pair of transparent sight regions 22 and 24 which are of transparent material and a central bridging region 26 which may or may not be transparent.

The upper edge of each sight region 22, 24 displays a rectangular-shaped recess 28, 30 which the bridging region 26 displays a recessed area 32.

The upper distal end of each sight region 22, 24 displays an oblong opening 34, 35.

The brow frame 14 comprises two sections 36 and 38 which are adapted to lie along the upper edge of the lens. The brow frame includes a recessed area 40 which is in registry with the bridging region 26 of the lens. The opposite ends 42 and 44 have a dimension such that they may extend through the respective openings 34, 35 whereby the pivot pins 46 and 48 connecting the ear stems to the brow frame will be located rearwardly of the lens when the brow frame is mounted to the lens.

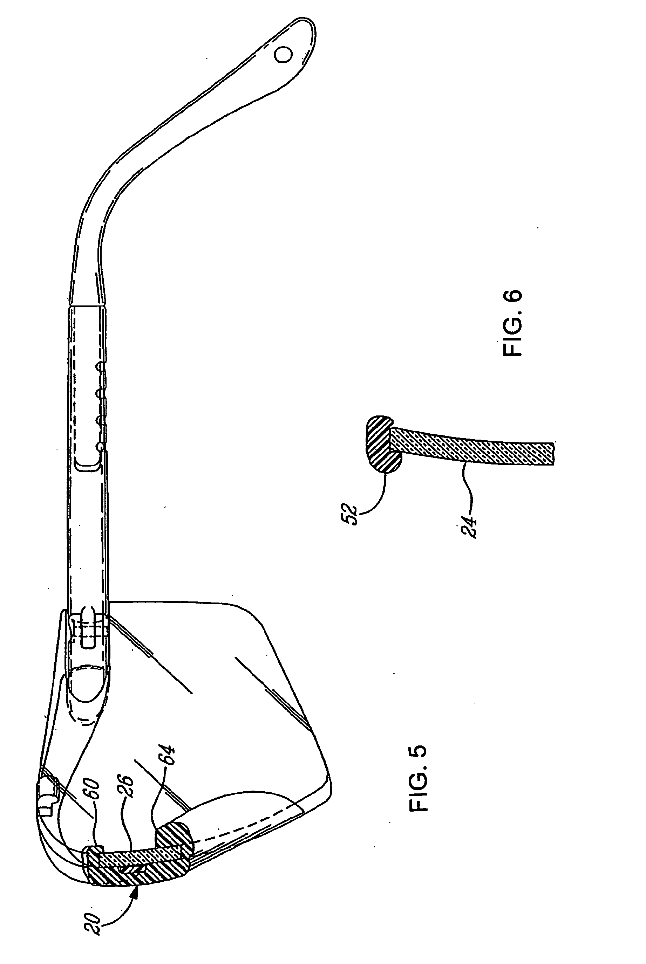

The brow frame 14 further includes a pair of rearwardly extending hooks 50 and 52 which have a width slightly less than the width of their corresponding recesses 28 and 30 of the lens (see Figure 6).

The ear stems 16 and 18 are pivotly connected at 46 and 48 to the respective ends of 42 and 44 of the brow frame to move between an inwardly folded position and a rearwardly extending ear contacting position.

The nose piece 20 has at it upper edge, a hook extension 60 having a width adapted to be positioned over area 32 of the bridging region 26. The central region 62 of the nose piece has a flat rear surface which is adapted to contact the flat surface area 40 of the brow frame 14. The nose piece also includes a narrow vertical curved rear wall 64 which, together with the rear face of the central region 62 defines a recess in which the lower edge 66 of the bridging region 26 may sit. This rear wall 64 downwardly extends along opposite sides (one of which is shown as 64a) so as to further serve as a backing against which may bear part of the lower edge 68 of the sight region 22 as well as part of the lower edge of the sight region 24.

Although the invention has been described above with respect to one specific form, it will be evident to the person skilled in the art that it may be refined and modified in various ways. It is therefore wished to have it understood that the present invention should not be limited in interpretation except by the terms of the following claims.

## Claims

1. Eyewear comprising:
a unitary lens (12) comprising a pair of transparent sight regions (22, 24) and a bridging region (26) between said sight regions; said lens displaying an upper edge extending along said sight and bridging regions, a lower edge extending along said sight and bridging regions and a pair of openings (34, 35) respectively provided at a distal upper end of said sight regions (22, 24);
a brow frame (14) engaging said upper edge of said lens (12) and having opposite ends (42, 44) extending through said openings (34, 35); and
a pair of ear stems (16, 18) mounted at respective opposite ends (42, 44) of said brow frame (14) and rearwardly of said openings (34, 35);
**characterized by**
a detachable nose piece (20) engaging said brow frame (14) and engaging said lower edge of said bridging region (26) and parts of said sight regions (22, 24) to secure assembly of said brow frame (14) to said lens (12), wherein said upper edge of said lens (12) comprises a recessed area (32) over said bridge region (26) and wherein said nose piece (20) comprises a hook portion (60) engaging said recessed area.

2. Eyewear as defined in claim 1, wherein said upper edge of said lens (12) includes recesses (28, 30) in said sight regions (22, 24) and wherein said brow frame (14) comprises hook means (50, 52) engaging in said recesses.

3. Eyewear as defined in claim 1 or 2, wherein said nose piece (20) displays a groove adapted to receive the lower edge of said bridging region (26) and said parts of said sight regions (22, 24) therein.

4. Eyewear as defined in anyone of claims 1 to 3, wherein the unitary lens (12) is an arcuate lens.

## Patentansprüche

1. Brille, umfassend:
eine einheitliche Linse (12), umfassend ein Paar transparenter Sichtbereiche (22, 24) und einen Brückenbereich (26) zwischen den Sichtbereichen; wobei die Linse einen oberen Rand, der sich die Sicht- und Brückenbereiche entlang erstreckt, einen unteren Rand, der sich die Sicht- und Brückenbereiche entlang erstreckt, und ein Paar Öffnungen (34, 35) aufweist, die jeweils an einem distalen oberen Ende der Sichtbereiche (22, 24) vorgesehen sind;
einen Stirnrahmen (14), der den oberen Rand der Linse (12) in Eingriff nimmt und gegenüberliegende Enden (42, 44) aufweist, die sich durch die Öffnungen (34, 35) erstrecken; und
ein Paar Ohrenbügel (16, 18), die an jeweiligen gegenüberliegenden Enden (42, 44) des Stirnrahmens (14) und hinter den Öffnungen (34, 35) angebracht sind;
**gekennzeichnet durch**
ein abnehmbares Nasenstück (20), das den Stirnrahmen (14) in Eingriff nimmt und den unteren Rand des Brückenbereichs (26) und Teile der Sichtbereiche (22, 24) in Eingriff nimmt, um den Zusammenbau des Stirnrahmens (14) mit der Linse (12) zu sichern, wobei der obere Rand der Linse (12) ein ausgespartes Gebiet (32) über dem Brückenbereich (26) umfasst und wobei das Nasenstück (20) einen Hakenabschnitt (60), der das ausgesparte Gebiet in Eingriff nimmt, umfasst.

2. Brille nach Anspruch 1, wobei der obere Rand der Linse (12) Aussparungen (28, 30) in den Sichtbereichen (22, 24) enthält und wobei der Stirnrahmen (14) Hakenmittel (50, 52), die die Aussparungen in Eingriff nehmen, umfasst.

3. Brille nach Anspruch 1 oder 2, wobei das Nasenstück (20) eine Rille aufweist, die dazu ausgelegt ist, den unteren Rand des Brückenbereichs (26) und die Teile der Sichtbereiche (22, 24) in sich aufzunehmen.

4. Brille nach einem der Ansprüche 1 bis 3, wobei die einheitliche Linse (12) eine bogenförmige Linse ist.

## Revendications

1. Lunettes, comprenant :
un verre unitaire (12) comprenant une paire de régions de vue transparentes (22, 24) et une région de jonction (26) entre lesdites régions de vue ; ledit verre présentant un bord supérieur s'étendant le long desdites régions de vue et de jonction, un bord inférieur s'étendant le long desdites régions de vue et de jonction, et une paire d'ouvertures (34, 35) prévues respectivement à une extrémité supérieure distale desdites régions de vue (22, 24) ;
un cadre de front (14) s'engageant avec ledit bord supérieur dudit verre (12) et ayant des extrémités opposées (42, 44) s'étendant à travers lesdites ouvertures (34, 35) ; et
une paire de branches d'oreilles (16, 18) montées à des extrémités opposées respectives (42, 44) dudit cadre de front (14) et à l'arrière desdites ouvertures (34, 35) ;
**caractérisées par**
une partie de nez détachable (20) s'engageant avec ledit cadre de front (14) et s'engageant avec ledit bord inférieur de ladite région de jonction (26) et des parties desdites régions de vue (22, 24) afin de fixer l'ensemble dudit cadre de front (14) audit verre (12), ledit bord supérieur dudit verre (12) comprenant une zone en retrait (32) au-dessus de ladite région de jonction (26), et ladite partie de nez (20) comprenant une portion de crochet (60) s'engageant avec ladite zone en retrait.

2. Lunettes selon la revendication 1, dans lesquelles ledit bord supérieur dudit verre (12) comporte des retraits (28, 30) dans lesdites régions de vue (22, 24) et dans lesquelles ledit cadre de front (14) comprend des moyens de crochet (50, 52) s'engageant dans lesdits retraits.

3. Lunettes selon la revendication 1 ou 2, dans lesquelles ladite partie de nez (20) présente une gorge prévue pour recevoir le bord inférieur de ladite région de jonction (26) et lesdites parties desdites régions de vue (22, 24).

4. Lunettes selon l'une quelconque des revendications 1 à 3, dans lesquelles le verre unitaire (12) est un verre courbe.
